**Europäisches Patentamt**

**European Patent Office**

**Office européen des brevets**

(11) Veröffentlichungsnummer: **0 062 932**
**B1**

# EUROPÄISCHE PATENTSCHRIFT

(45) Veröffentlichungstag der Patentschrift:
**05.12.84**

(21) Anmeldenummer: **82200229.1**

(22) Anmeldetag: **25.02.82**

(51) Int. Cl.³: **F 01 K 23/06**, F 02 C 7/16

(54) **Kombiniertes Gas-Dampfturbinen-Kraftwerk.**

(30) Priorität: **03.04.81 CH 2271/81**

(43) Veröffentlichungstag der Anmeldung:
**20.10.82 Patentblatt 82/42**

(45) Bekanntmachung des Hinweises auf die Patenterteilung:
**05.12.84 Patentblatt 84/49**

(84) Benannte Vertragsstaaten:
**CH DE FR GB LI**

(56) Entgegenhaltungen:
**CH - A - 286 635**
**FR - A - 1 033 897**
**FR - A - 1 318 433**
**US - A - 3 150 487**

(73) Patentinhaber: **BBC Aktiengesellschaft Brown, Boveri & Cie., Haselstrasse, CH-5401 Baden (CH)**

(72) Erfinder: **Mukherjee, Dilip, Zelgli 17, CH-5442 Fislisbach (CH)**

ACTORUM AG

**Beschreibung**

Die vorliegende Erfindung betrifft ein kombiniertes Gas-Dampfturbinen-Kraftwerk mit dampfgekühlten Gasturbinen-Komponenten, bei welchem die Kühldampferzeugung ausserhalb der Gasturbine in einem Abhitzekessel erfolgt.

Es sind bereits Anlagen bekanntgeworden, bei welchen zur Kühlung der Gasturbine Dampf verwendet wird, welcher durch Wärmeaustausch mit den Abgasen der Gasturbine erzeugt wird und der Turbinenbeschaufelung so zugeführt wird, dass der Kühldampf im Arbeitsmittelkanal die Turbinenbeschaufelung umströmt und damit den Rotor mit den Schaufelfüssen und das Gehäuse von den Heissgasen abschirmt. Nach dem Durchströmen der Turbine wird der Kühldampf vom Arbeitsgas getrennt aufgefangen und einer Dampfturbine zugeführt (CH-A 364 656).

Als Nachteil dieser Anordnung muss einmal die ungleichmässige Kühlung des Nabenteiles der Laufschaufeln angesehen werden und zum anderen, dass die saubere Trennung des Arbeitsmittels vom Kühldampf nach dem Durchströmen der Turbine sehr schwierig ist. Die ungleichmässige Kühlung ist insbesondere darauf zurückzuführen, dass der Kühldampf, welcher wesentlich kälter als das Arbeitsmittel ist, in der inneren Kreisringzone des Zuströmkanals zugeführt wird, während das wesentlich heissere Arbeitsmittel an der äusseren Kreisringzone strömt.

Es ist Aufgabe der vorliegenden Erfindung eine kombinierte Gas-Dampfturbinenanlage zu schaffen, bei welcher die Gasturbine mit einer hohen Eintrittstemperatur betrieben wird und die im Heissgasstrom der Turbine befindlichen Teile dampfgekühlt werden, wobei der Kühldampf in einer Dampfturbine weiter entspannt wird und durch Verwendung einer Zwischenüberhitzung im Dampferzeuger ein hoher Wirkungsgrad der Anlage erzielt werden kann.

Die vorgenannte Aufgabe wird erfindungsgemäss durch die kennzeichnenden Merkmale des Anspruchs 1 gelöst.

Der Vorteil der erfindungsgemässen Anordnung ist insbesondere darin zu erblicken, dass durch die Verwendung eines Zweidruck-Abhitzekessels mit Zwischenüberhitzung die Abwärme der Gasturbine besonders gut ausgenützt werden kann und dieser dadurch gewonnene Kühldampf der Gasturbine zugeführt wird, wo er nach der Zwangsführung durch das Gehäuse und die hohlen Leitschaufeln und in einem davon getrennten Strom durch den Rotor und die hohlen Laufschaufeln diese Teile kühlt und dabei diese Gasturbinen-Komponenten gleichzeitig als Überhitzer für einen Teil der Dampfmenge dienen. Dadurch kann dieser die Gasturbine verlassende Dampfstrom dem im Hochdruckteil der Dampfturbine teilentspannten und im Zwischenüberhitzer aufgeheizten Dampf beigemischt werden und in den Niederdruck-Teil der Dampfturbine geleitet werden, ohne dass ein weiteres Aufheizen am Zwischenüberhitzer erforderlich wird. Dies ergibt einen optimalen Ausnützungswert.

Gemäss dem Anspruch 2 werden mindestens 40% des Gesamtarbeitsmittels für Kühlzwecke der Gasturbine verwendet.

Da diese Kühldampfmenge nach Aufheizen in der Gasturbine zur Arbeitsleistung im Dampfturbinen-Niederdruck-Teil zur Verfügung steht, tritt praktisch keine Verlustleistung, bzw. Dampfverlust auf.

Weitere Ausbildungen des Erfindungsgegenstandes gehen aus den Ansprüchen 3 bis 6 hervor.

Durch die Anordnung, von vom Dampfstrom getrennter Sperrluftkanäle kann vom Verdichter entnommene Luft parallel zum Dampfstrom von der Turbinen-Eintrittsseite zugeführt werden. Da in diesen Sperrluftkanälen vorzugsweise gegenüber dem Heissgaskanal ein leichter Überdruck herrscht, kann eine kleine Luftmenge in diesen überströmen, wodurch ein Sperreffekt erzielt wird. Ein besonderer Vorteil dieser Anordnung ist auch darin zu erblicken, dass aufgrund der relativ geringen Sperrluftmengen zur Sperrung des Heissgases im Rotor und im Schaufelträger, die sonst erforderliche grosse Kühlluftmenge nicht notwendig ist, so dass durch den Wegfall der dafür benötigten zusätzlichen Verdichterleistung eine höhere Gasturbinenleistung als Nutzleistung verfügbar ist.

Die Anordnung von Dampfführungskanälen im Rotor und Stator, welche mit den Kühldampfführungen in den Schaufeln und den Wärmestausegmenten in Verbindung stehen, ergibt eine gleichmässige Kühlung aller vom heissen Arbeitsmittel umströmten Teile.

In der Zeichnung ist ein Ausführungsbeispiel einer erfindungsgemässen Kombi-Anlage dargestellt.

Es zeigt:

Fig. 1 eine schematische Darstellung einer Kombi-Anlage,

Fig. 2 ein Schema der Dampf- und Sperrluftführung in der Gasturbine,

Fig. 3 einen Teilquerschnitt durch einen Rotorabschnitt in der Ebene einer Laufschaufelreihe mit Luft- und Dampfführungskanälen,

Fig. 4 einen Teil-Querschnitt durch einen Rotorabschnitt mit zwischen zwei Wärmestausegmenten angeordneten Dampfführungskanälen.

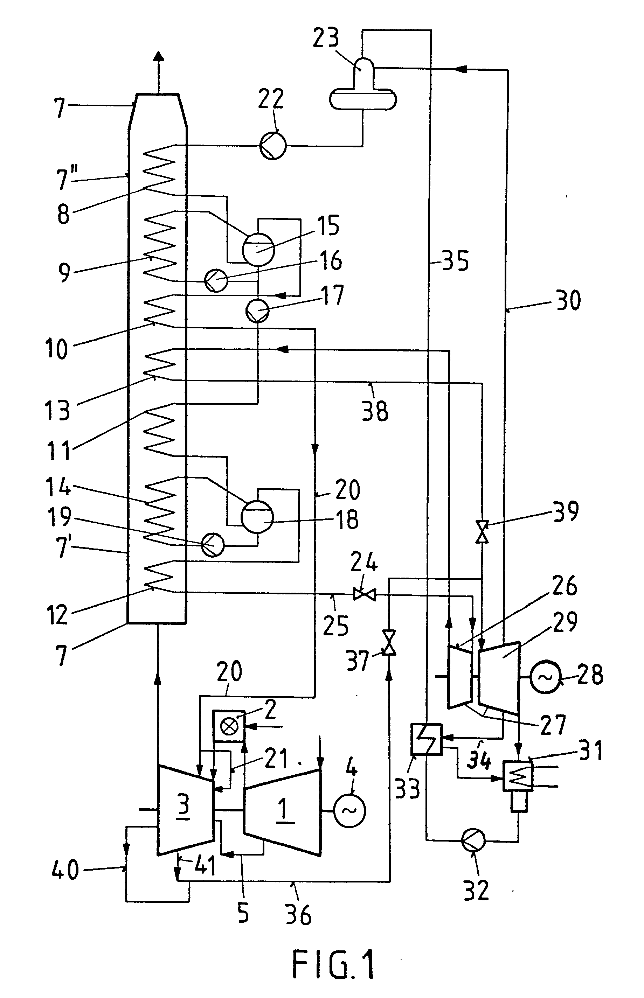

Gemäss Fig. 1 ist in einer erfindungsgemässen kombinierten Gas-Dampfturbinenanlage eine aus einem Verdichter 1, einer Brennkammer 2 und einer Turbine 3 bestehende Gasturbine, welche einen Generator 4 antreibt, einem Abhitzekessel 7 vorgeschaltet, der einen Hochdruckteil 7' und einen Niederdruckteil 7'' aufweist. Die Gasturbine 1, 2, 3 wird mit einer hohen Eintrittstemperatur von etwa 1200°C betrieben, weshalb Rotor, Stator und Beschaufelung der Turbine 3 dampfgekühlt werden. Die Turbinenabgase durchströmen im Abhitzekessel 7 die nacheinander in Strömungsrichtung darin angeordneten Hochdruck- 7' und Niederdruckteile 7'' und treten mit einer Temperatur von etwa 170°C aus dem Abhitzekessel 7 aus. Der Hochdruckteil 7' des Abhitzekessels 7 umschliesst (in Anströmrichtung der Abgase) einen Hochdrucküberhitzer 12, einen Hochdruckverdampfer 14, einen Hochdruckvorwärmer 11 sowie einen Zwischenüberhitzer 13. Im Niederdruckteil 7'' des Abhitzekessels 7 wird — wiederum in Strömungsrichtung der Abgase — angeordnet ein Kühldampfüberhitzer 10, ein Niederdruckverdampfer 9 und ein Niederdruckvorwärmer 8.

Der im Hochdrucküberhitzer 12 überhitzte Frischdampf gelangt über eine mit einem Ventil 24 versehene Frischdampfleitung 25 über eine Hochdruckturbine 26 über den Zwischenüberhitzer 13 in eine Niederdruckturbine 29 einer Dampfturbine 27, welche einen Generator 28 mit einer Leistung von etwa 325 MW antreibt. In der Dampfturbine 27 wird der Dampf entspannt, wobei Anzapfdampf der Niederdruckstufe 29 entnommen und über eine Anzapfleitung 30 einem Speisewasserbehälter 23 zur Beheizung desselben zugeführt wird. Der vollständig entspannte Dampf aus der Dampfturbine 27 gelangt über einen Kondensator 31 und eine Kondensatpumpe 32 in einen Vorwärmer 33, der von Anzapfdampf der Dampfturbine 27 über eine Entnahmeleitung 34 beheizt wird, über eine Rückführungsleitung 35 in den Speisewasserbehälter 23.

Vom Speisewasserbehälter 23 wird Kesselspeisewasser von einer Speisepumpe 22 dem Niederdruckeconomiser 8 zugeführt, dort vorgewärmt und in eine Niederdrucktrommel 15 geleitet. Ein Teil des Trommelinhalts gelangt über die Umwälzpumpe 16 in den Niederdruckverdampfer 9 des Abhitzekessels 7 und wird in dampfförmigem Zustand in die Trommel 15 zurückgeleitet. Dieser Dampfanteil wird erfindungsgemäss im rauchgasseitig zwischen Hochdruckvorwärmer 11 und Niederdruckverdampfer 9 angeordneten Kühldampfüberhitzer 10 leicht überhitzt und der Gasturbine zur Kühlung zugeleitet. Der andere Teil des Trommelinhalts wird mittels einer Hochdruckpumpe 17 über den Hochdruckeconomiser 11 in eine Hochdrucktrommel 18 gefördert. Über eine Umwälzpumpe 19 gelangt das Arbeitsmittel in den Hochdruckverdampfer 14 und zurück in die Hochdrucktrommel 18. Aus der Trommel 18 gelangt der Hochdruckdampf über den Hochdrucküberhitzer 12 und die Frischdampfleitung 25 zur Dampfturbine 27.

Der im Kühldampfüberhitzer leicht überhitzte Kühldampf gelangt über eine Kühldampfleitung 20 in die Gasturbine 3, wo er beim Durchströmen der vom Heissgas umspülten Teile auf etwa 450°C aufgeheizt wird, so dass er etwa dieselbe Temperatur wie der aus dem Zwischenüberhitzer 13 in einer Zudampfleitung 38 kommende Dampf aufweist, welchem er über Niederdruckturbine 29 der Dampfturbine 27 zugeleitet wird. In die Zudampfleitung 38 kann zur Druckanpassung noch ein Ventil 39 eingebaut sein.

Vor dem Eintritt des Kühldampfes über die Kühldampfleitung 20 in die Hochdruckseite der Turbine 3 wird ein Teil des Kühldampfes über eine Abzweigleitung 21 zur Kühlung der Beschaufelung und des Rotors der Turbine 3, der andere Teil zur Kühlung der Schaufeln und des Stators der Turbine 3 geführt. Nach dem Durchströmen und Kühlen der Schaufeln, des Rotors und des Stators gelangt der nunmehr stark überhitzte Dampf über Leitungen 40, 41 und die gemeinsame Leitung 36 in die Zudampfleitung 38, welche in eine Zwischenstufe der Dampfturbine 27 führt. Durch das Aufheizen des Kühldampfes in der Turbine 3 wird das Temperaturgefälle zwischen dem Zwischenüberhitzerdampf aus dem Zwischenüberhitzer 13 und dem Kühldampf ausgeglichen.

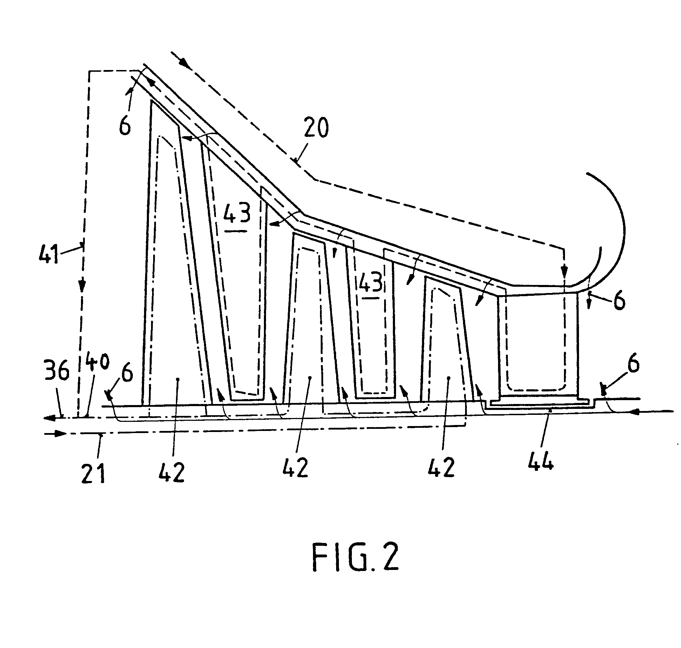

In der Fig. 2 ist die Führung der beiden Kühldampfströme, nämlich des Rotorkühldampfes mit strichpunktierten und die Führung des Statorkühldampfes mit strichlierten Linien sowie die Sperrluftführung mit einer ausgezogenen Linie bezeichnet. Die Sperrluft wird von einer Stelle entsprechenden Druckes im Verdichter 1 abgezweigt und über eine Sperrluftleitung 5 (Fig. 1) der Turbine 3 zugeführt. Der Kühldampf für die Rotorschaufeln 42 und den Rotor gelangt über die Abzweigleitung 21 und der Kühldampf für die Leitschaufeln 43 und den Stator über die Leitung 20 in die Turbine. Gleichzeitig mit den Dampfströmen 20, 21 wird in bekannter Weise Sperrluft gemäss den Pfeilen 6 in von den Dampfströmen 20, 21 getrennte Luftführungskanäle 44 von der Turbineneintrittsseite zugeführt und anschliessend in den Strömungskanal abgeleitet. Nach dem Durchströmen und Kühlen der Turbine 3 wird der die Leitschaufeln 43 und den Stator kühlende Dampf über die Leitung 41 und der die Rotorschaufeln 42 und den Rotor kühlende Dampf über die Leitung 40 abgeführt.

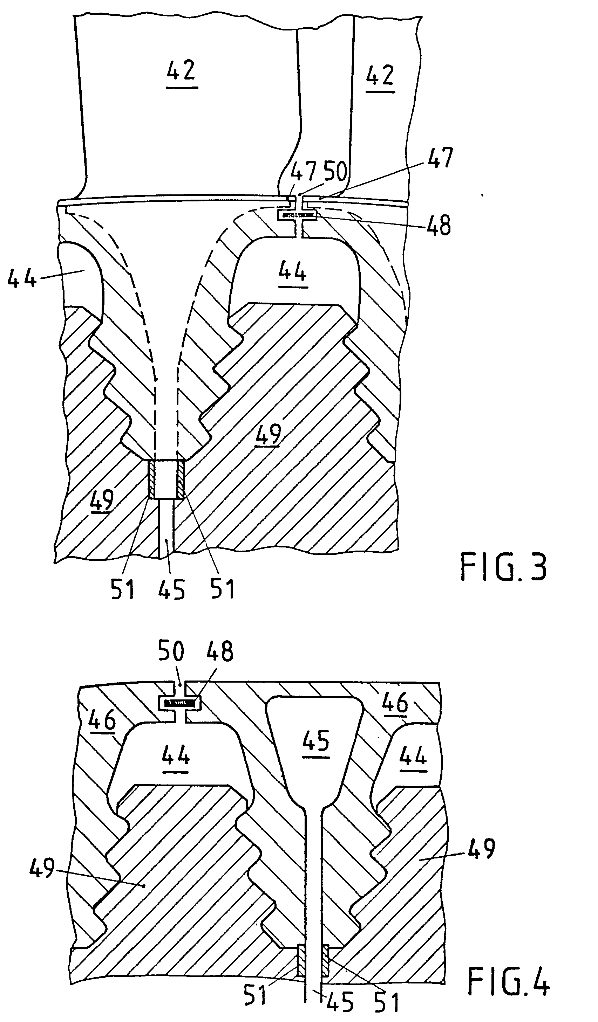

Wie in den Fig. 3 und 4 dargestellt, sind die hohlen Rotorschaufeln 42 und die Wärmestausegmente 46 im Rotor 49 befestigt. Zu den hohlen Schaufelfüssen und den zwischen den einzelnen Schaufelreihen (Fig. 4) angeordneten Wärmestausegmenten 46 führen Dampfführungskanäle 45. Getrennt davon sind die Luftführungskanäle 44 angeordnet. Zwischen den jeweils benachbarten Fussplatten 47 der Rotorschaufeln sind Dichtungsstreifen 48 vorgesehen. Durch den in den Luftführungskanälen 44 herrschenden leichten Überdruck kann eine geringe Leckluftmenge durch Luftaustrittsöffnungen 50 in den Heissgaskanal der Turbine strömen und dadurch den Sperreffekt bewirken. Zwischen dem Rotor 49 und den Dampfführungskanälen 45 sind Dichtelemente 51 vorgesehen. Die Kühlung der nicht gezeigten Leitschaufeln erfolgt auf dieselbe Art.

Durch die vorstehend beschriebene erfindungsgemässe Dampfkühlung der Gasturbine ergibt sich ein wesentlich höherer thermischer Wirkungsgrad der kombinierten Anlage gegenüber von Anlagen nur mit Luftkühlung der Gasturbine. Ferner kann durch den Mehrdruckkessel zur Kühlung der Gasturbine ein Druck gewählt werden, der wesentlich tiefer liegt, als der Frischdampfdruck der Dampfturbine. Gleichzeitig dient die Gasturbine als Zwischenüberhitzer und der in der Zwischenüberhitzerstufe 13 überhitzte Dampf kann mit dem die Gasturbine durchströmten Kühldampf vermischt und der Niederdruck-Dampfturbine 29 zugeführt werden.

**Patentansprüche**

1. Kombiniertes Gas-Dampfturbinen-Kraftwerk mit dampfgekühlten Gasturbinen-Komponenten, bei welchem die Kühldampferzeugung ausserhalb der Gasturbine (1, 2, 3) in einem Abhitzekessel (7) erfolgt, gekennzeichnet durch die Kombination folgender Merkmale:

a) die Gasturbinen-Abgaswärme wird in einem aus Niederdruck-Teil (7'') und Hochdruck-Teil (7') bestehenden Zweidruck-Abhitzekessel (7) ausgenützt; b) der im Niederdruckverdampfer (9) des Abhitzekessels (7) erzeugte Dampf wird in einem rauchgasseitig zwischen Zwischenüberhitzer (13) und Niederdruck-Verdampfer (9) angeordneten Kühldampfüberhitzer (10) leicht überhitzt;

c) dieser Kühldampf wird einerseits im Gasturbinengehäuse und hohlen Leitschaufeln (43) und hiervon getrennt, andererseits im Rotor (49) und hohlen Leitschaufeln (42) zwangsgeführt, wobei er die durchströmten Komponenten kühlt und bei seiner Entnahme stark überhitzt ist;

d) der im Hochdruckteil (26) der Dampfturbine (27) teilentspannte Dampf wird im Abhitzekessel (7) in einem rauchgasseitig zwischen Hochdruck-Vorwärmer (11) und Kühldampfüberhitzer (10) angeordneten Zwischenüberhitzer (13) aufgeheizt und zusammen mit dem in der Gasturbine (3) entnommenen Dampf zur weiteren Entspannung in den entsprechend grösser bemessenen Niederdruck-Teil der Dampfturbine (27) eingeleitet.

2. Kombiniertes Gas-Dampfturbinen-Kraftwerk nach Anspruch 1, dadurch gekennzeichnet, dass mindestens 40% des Gesamtarbeitsmittels für Kühlzwecke verwendet werden.

3. Kombiniertes Gas-Dampfturbinen-Kraftwerk nach Anspruch 1, dadurch gekennzeichnet, dass parallel zum Kühldampf für die Gasturbine (3) aus dem Verdichter (1) Sperrluft über vom Dampfstrom getrennte Kanäle (44) an der Gasturbinen-Eintrittsseite über das Gehäuse und den Rotor in die Leit- (43) und Laufschaufeln (42) zugeführt wird.

4. Kombiniertes Gas-Dampfturbinen-Kraftwerk nach Anspruch 3, dadurch gekennzeichnet, dass im Rotor (49) der Gasturbine (3) Dampfführungskanäle (45) und Luftführungskanäle (44) angeordnet sind.

5. Kombiniertes Gas-Dampfturbinen-Kraftwerk nach Anspruch 3, dadurch gekennzeichnet, dass im Stator der Gasturbine (3) Dampfführungskanäle (45) und Luftführungskanäle (44) angeordnet sind.

6. Kombiniertes Gas-Dampfturbinen-Kraftwerk nach den Ansprüchen 4 und 5, dadurch gekennzeichnet, dass die Dampfführungskanäle (45) und die Luftführungskanäle (44) die Stator- (43) und Rotorschaufelfüsse (42) sowie zwischen den einzelnen Schaufelreihen angeordnete Wärmestausegmente (46) durchdringen.

## Claims

1. A combined gas/steam turbine power station having steam-cooled gas turbine components, in which the cooling steam is generated outside the gas turbine (1, 2, 3) in a waste-heat boiler (7), characterised by a combination of the following features:

a) the gas turbine waste-gas heat is utilised in a dual pressure waste-heat boiler (7) consisting of a low-pressure section (7'') and a high-pressure section (7');

b) the steam generated in the low pressure evaporator (9) of the waste-heat boiler (7) is slightly superheated in a cooling-steam superheater (10) arranged at the flue-gas side between the reheater (13) and the low-pressure evaporator (9);

c) this colling steam is forced, on the one hand, through the gas turbine casing and hollow guide blades (43) and, separately from this, on the other hand, through the rotor (49) and hollow rotor blades (42) and cools the components through which it flows and is highly superheated on its removal;

d) the steam, partially expanded in the high-pressure section (26) of the steam turbine (27), is heated up in the waste-heat boiler (7), in a reheater (13) arranged at the flue gas side between the high-pressure preheater (11) and the cooling-steam superheater (10) and is introduced, together with the steam removed in the gas turbine (3), into the low-pressure section of the steam turbine (27) which has correspondingly larger dimensions, for further expansion.

2. A combined gas/steam turbine power station according to Claim 1, characterised in that at least 40% of the total working medium is used for cooling purposes.

3. A combined gas/steam turbine power station according to Claim 1, characterised in that, in parallel with the cooling steam for the gas turbine (3), blocking air is supplied from the condenser (1) via ducts (44), which are separate from the steam flow, at the gas turbine inlet side via the casing and the rotor into the guide (43) and rotor blades (42).

4. A combined gas/steam turbine power station according to Claim 3, characterised in that in the rotor (49) of the gas turbine (3) steam-conducting ducts (45) and air-conducting ducts (44) are arranged.

5. A combined gas/steam turbine power station according to Claim 3, characterised in that in the stator of the gas turbine (3) steam-conducting ducts (45) and air-conducting ducts (44) are arranged.

6. A combined gas/steam turbine power station according to Claims 4 and 5, characterised in that the steam-conducting ducts (45) and the air-conducting ducts (44) penetrate the stator (43) and rotor-blade roots (42) and heat-accumulating segments (46) arranged between the individual rows of blades.

## Revendications

1. Centrale électrique à turbines à gaz-vapeur combinée comprenant des éléments de turbine à gaz refroidis par vapeur dans laquelle la production de vapeur de refroidissement s'effectue à l'extérieur de la turbine à gaz (1, 2, 3) dans une chaudière de récupération, caractérisée par les particularités suivantes prises en combinaison:

a) la chaleur des gaz brûlés de la turbine à gaz est exploitée dans une chaudière de récupération à deux pressions consistant en une partie à basse pression (7'') et une partie à haute pression (7'),

b) la vapeur produite dans l'évaporateur à basse pression (9) de la chaudière de récupération (7) est légèrement surchauffée dans un surchauffeur de vapeur de refroidissement (10) disposé du côté des gaz brûlés entre un surchauffeur intermédiaire (13) et l'évaporateur à basse pression (9),

c) cette vapeur de refroidissement est introduite de force d'une part dans l'enveloppe de la turbine à gaz et dans des ailettes de guidage creuses (43) et indépendamment de cela d'autre part dans le rotor (49) et dans des ailettes motrices creuses (42) de sorte qu'elle refroidit les éléments qu'elle traverse et est fortement surchauffée à sa sortie,

**0 062 932**

d) la vapeur partiellement détendue dans la partie à haute pression (26) de la turbine à vapeur (27) est chauffée dans la chaudière de récupération (7) dans un surchauffeur intermédiaire (13) disposé du côté des gaz brûlés entre le préchauffeur à haute pression (11) et le surchauffeur de vapeur de refroidissement (10) et est introduite en même temps que la vapeur sortant de la turbine à gaz (3) en vue d'une nouvelle détente dans la partie à basse pression de la turbine à vapeur (27) dont les dimensions sont supérieures dans une mesure correspondante.

2. Centrale électrique à turbines à gaz-vapeur combinée suivant la revendication 1, caractérisée en ce qu'au moins 40% de l'ensemble de l'agent de travail sont utilisés à des fins de refroidissement.

3. Centrale électrique à turbines à gaz-vapeur combinée suivant la revendication 1, caractérisée en ce que parallèlement à la vapeur de refroidissement pour la turbine à gaz (3), de l'air sous surpression provenant du condenseur (1) est amené par des canaux (44) séparés du courant de vapeur du côté de l'entrée de la turbine à gaz par-dessus l'enveloppe et le rotor dans les ailettes de guidage (43) et motrices (42).

4. Centrale électrique à turbines à gaz-vapeur combinée suivant la revendication 3, caractérisée en ce que des canaux de vapeur (45) et des canaux d'air (44) sont disposés dans le rotor (49) de la turbine à gaz (3).

5. Centrale électrique à turbines à gaz-vapeur combinée suivant la revendication 3, caractérisée en ce que des canaux de vapeur (45) et des canaux d'air (44) sont disposés dans le stator de la turbine à gaz (3).

6. Centrale électrique à turbines à gaz-vapeur combinée suivant les revendications 4 et 5, caractérisée en ce que les canaux de vapeur (45) et les canaux d'air (44) traversent les pieds des ailettes de stator (43) et de rotor (42) ainsi que des segments accumulateurs de chaleur (46) disposés entre les diverses rangées d'ailettes.

FIG.1

FIG.2

42    42

47 50

47

48

44

44

49

49

51  45  51

FIG.3

50  48

46    46

44    45    44

49

49

51    45    51

FIG.4